# DEMANDE DE BREVET EUROPEEN

(11) **EP 2 602 394 A1**
(43) Date de publication de la demande: **12.06.2013**
(21) Numéro de dépôt: 11192172.2
(22) Date de dépôt: 06.12.2011
(51) Int. Cl.: E04B 1/76, E04B 1/80, F16L 59/02

(54) **Isolant multicouche**

(71) Demandeur: Alutthermo AG, 4790 Burg Reuland (BE)
(72) Inventeur: Jakobs, M. Lambert, B-4783 Saint Vith (BE)
(74) Mandataire: Pronovem

(57) **Abrégé**

Isolant multicouche (1) comportant une couche d'ouate à base de fibres de polyester (4) prise en sandwich entre deux films à bulles d'air (2).

## Description

### Objet de l'invention

La présente invention se rapporte à un isolant multicouche comportant une couche isolante hautement compressible.

### Etat de la technique

Les isolants multicouches sont connus depuis de nombreuses années et ont connu une évolution constante. Ils comportent une série de couches dont chacune est susceptible de posséder une fonction propre. L'isolant comporte généralement sur ses faces extérieures un film réfléchissant de type aluminium, connu pour protéger l'habitation contre les échanges calorifiques de type rayonnement infrarouge. La partie isolante intrinsèque des isolants multicouches est souvent constituée de films à bulles d'air et parfois de mousses de polyéthylène.

Des exemples d'isolants multicouches sont divulgués dans le document EP 0 718 447 B1 et présentés aux figures 1 et 2 (isolant Aluthermo^{®}) pour une application comme sous-toiture. Dans ce dernier cas, on observe que l'isolant doit être peu dense pour pouvoir être comprimé jusqu'à une épaisseur très faible par un contre lattage.

Les isolants de sous-toiture sont souvent utilisés en association avec un isolant minéral conventionnel du type laine de verre ou laine de roche placés entre les chevrons de la toiture. Il n'est cependant pas toujours possible de placer un tel isolant entre les chevrons, soit parce que l'espace disponible est trop limité, soit parce que les chevrons sont visibles. Il est alors nécessaire d'augmenter en conséquence les performances thermiques de l'isolant de sous-toiture. De manière plus générale, il peut être également intéressant d'augmenter la capacité d'isolation en disposant en sus de l'isolant conventionnel un isolant de sous-toiture plus performant thermiquement.

Le problème, c'est que les isolants minéraux conventionnels ne conviennent pas pour un complexe isolant de sous-toiture car ils sont trop denses pour pouvoir être comprimés jusqu'à une épaisseur très faible par un contre lattage.

### Buts de l'invention

La présente invention vise à surmonter les inconvénients de l'état technique en fournissant un nouvel isolant comportant une couche isolante hautement compressible.

Plus précisément, la présente invention vise à réaliser un isolant multicouche compressible à environ 90 % par un contre lattage de toiture.

### Résumé de l'invention

La présente invention se rapporte à un isolant multicouche comportant une couche d'ouate à base de fibres de polyester prise en sandwich entre deux films à bulles d'air.

Selon des modes particuliers de l'invention, l'isolant comporte au moins une ou une combinaison appropriée des caractéristiques suivantes :
- la couche d'ouate a une masse volumique inférieure à 15 kg/m³, de préférence inférieure à 13 kg/m³ ;
- ledit isolant peut être comprimé, en utilisation, à moins de 10 % de son épaisseur initiale ;
- chaque film à bulles d'air est recouvert d'une feuille d'aluminium sur sa face libre ;
- la feuille d'aluminium comporte un revêtement de polyéthylène basse densité sur sa face en contact avec le film à bulles d'air et un revêtement de nitrocellulose sur sa face libre ;
- la couche d'ouate a une épaisseur comprise entre 20 et 60 mm, de préférence entre 25 et 40 mm.

La présente invention se rapporte également à un procédé de fabrication de l'isolant tel que décrit ci-dessus, comportant les étapes suivantes :
- Extrusion du film à bulles d'air et simultanément lamination thermique du film à bulles d'air avec la feuille d'aluminium pour former un laminé ;
- Insertion et collage de l'ouate à base de fibres de polyester entre deux laminés.

Selon un mode particulier de l'invention, la colle utilisée dans le procédé est à base d'éthylène-acétate de vinyle.

Finalement, la présente invention se rapporte aussi à une utilisation de l'isolant tel que décrit ci-dessus, en sous-toiture, dans un mur, dans une paroi de séparation ou comme pare-vapeur.

### Brève description des figures

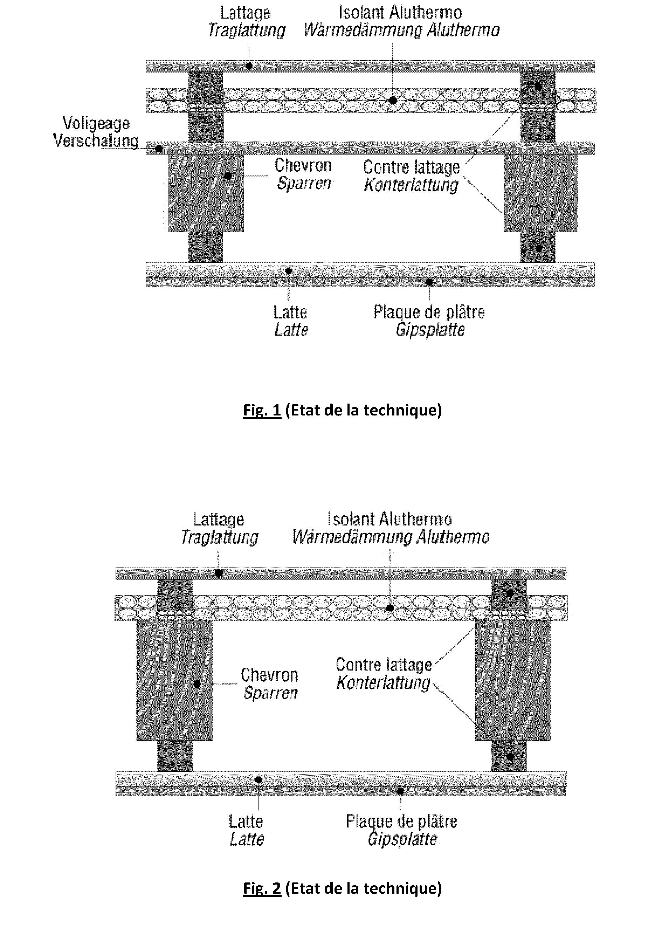

La figure 1 représente, selon l'état de la technique, un isolant de sous-toiture du type film à bulles avec couche d'aluminium. Cet isolant a été placé entre un double contre lattage.

La figure 2 représente, selon l'état de la technique, un isolant de sous-toiture du même type que celui de la figure 1. Cet isolant a été placé avec un simple contre lattage.

La figure 3 représente l'isolant selon l'invention avec sa couche isolante à base d'un non tissé de fibres de polyester prise en sandwich entre deux films à bulles recouverts d'une feuille d'aluminium.

La figure 4 représente la mise en oeuvre de l'isolant selon l'invention en sous-toiture.

### Légende

(1) Isolant multicouche
(2) Film à bulles d'air
(3) Feuille d'aluminium
(4) Ouate de polyester
(5) Chevron
(6) Lattage
(7) Contre lattage

### Description détaillée de l'invention

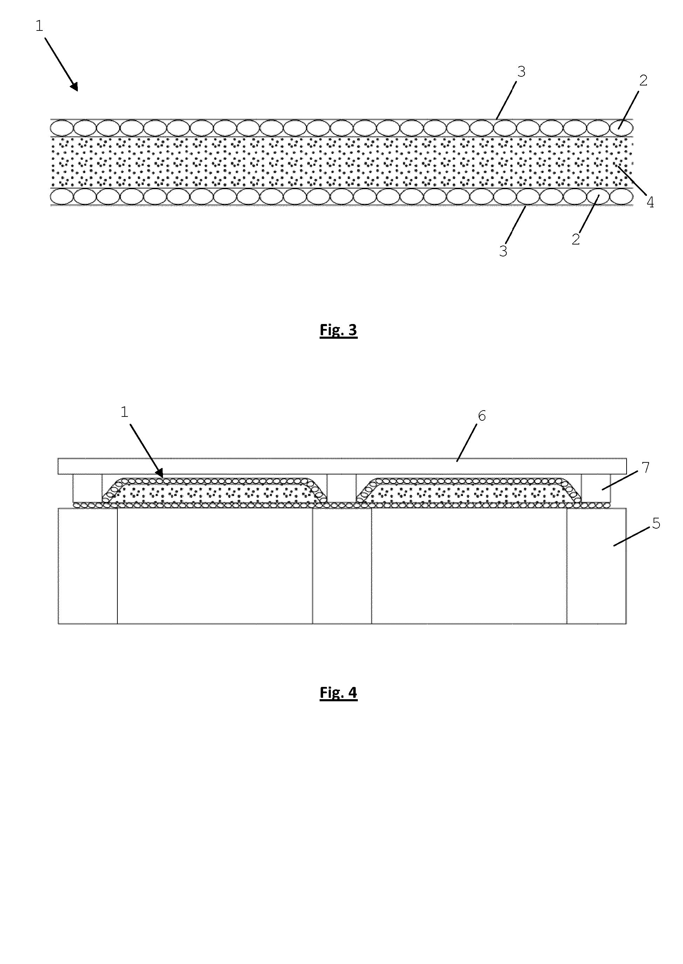

L'isolant 1 selon l'invention comporte trois couches schématisées à la figure 3. Les deux couches extérieures comportent un film à bulles d'air 2 recouvert d'une feuille d'aluminium 3. La feuille d'aluminium 3 est revêtue d'une couche de nitrocellulose (non représentée) sur sa face externe et d'une couche de polyéthylène basse densité (non représentée) sur sa face interne. La nitrocellulose empêche l'oxydation de l'aluminium et la couche de polyéthylène basse densité agit comme une interface entre l'aluminium et le film à bulles lui-même réalisé à partir de polyéthylène basse densité. La couche centrale 4 comporte des fibres non tissées à base de polyester. Ces fibres entremêlées peuvent aussi être appelées laine ou ouate de polyester, la caractéristique principale de ce type d'isolant étant sa densité extrêmement faible. Il s'agit en particulier d'une ouate liée thermiquement 100% polyester qui a une masse volumique inférieure à 15 kg/m³, de préférence inférieure à 13 kg/m³, et une épaisseur comprise entre 10 et 60 mm, de préférence entre 20 et 40 mm.

En appuyant une contre latte de toiture (contre lattage 7) contre l'isolant selon l'invention, on constate à la figure 4 que celui-ci peut être aisément comprimé. Ainsi, il peut être comprimé à environ 90 %, soit jusqu'à une épaisseur de l'ordre de 3 mm pour un isolant avec une épaisseur initiale de 35 mm.

A titre d'exemple, les caractéristiques des différents éléments constitutifs de l'isolant selon l'invention sont reprises ci-dessous.

### Couches extérieures :

- Revêtement de nitrocellulose avec une masse surfacique de 3 g/m² ;
- Feuille d'aluminium avec une épaisseur de 30 µ (98 g/m²);
- Revêtement de polyéthylène basse densité avec une épaisseur de 15 µ;
- Film à bulles avec une épaisseur de 150 µ (138 g/m²), réalisé avec du polyéthylène basse densité ayant une masse volumique de 921 kg/m³, avec des bulles de 4 mm de haut et 10 mm de diamètre, et autoextinguible (Class B2 suivant DIN 4102).

### Couche centrale :

- Couche de fibres non tissées à base de polyester (polyéthylène téréphtalate) avec une masse volumique d'environ 12 kg/m³ et une épaisseur de 35 mm, résistante au feu (conformément à la norme BS 5852 - source 2), et avec une conductivité thermique de 0.041 W/mK.

L'isolant multicouche selon l'invention est réalisé à l'aide d'un procédé comportant deux étapes principales. Dans une première étape, le film à bulles est extrudé et simultanément laminé (lamination thermique) avec la feuille d'aluminium. Cette dernière est préalablement revêtue de nitrocellulose sur une face et de polyéthylène basse densité sur l'autre face, la face comportant le revêtement de polyéthylène basse densité étant mise en contact avec le film à bulles lors de la lamination. Dans une seconde étape, les trois couches sont liées ensemble avec un adhésif. A cet effet, deux rouleaux standards comportant le laminé de la première étape sont déroulés et, à une même vitesse, l'ouate est insérée entre les laminés. Simultanément, l'adhésif est pulvérisé sur les films à bulles et les trois couches sont comprimées pour obtenir une bonne adhésion. En parallèle, l'isolant multicouche ainsi obtenu est mis à dimension, la découpe pouvant s'effectuer selon les directions transversale et longitudinale du produit. A titre d'exemple, l'adhésif utilisé peut être une colle à base d'EVA (éthylène-acétate de vinyle) avec une densité de 0,95 et une température d'application de 150-170°C.

L'isolant selon l'invention a été illustré ci-dessus pour une utilisation en sous-toiture. Il peut cependant être utilisé dans de nombreuses autres applications. On peut citer une utilisation comme pare-vapeur éventuellement en dessous d'un isolant complémentaire. Il peut également être utilisé dans les murs notamment en cas d'une construction à ossature bois ou comme isolant acoustique dans des parois de séparation.

## Revendications

1. Isolant multicouche (1) comportant une couche d'ouate à base de fibres de polyester (4) prise en sandwich entre deux films à bulles d'air (2).

2. Isolant (1) selon la revendication 1, dans lequel la couche d'ouate (4) a une masse volumique inférieure à 15 kg/m³, de préférence inférieure à 13 kg/m³.

3. Isolant (1) selon la revendication 1 ou 2, dans lequel ledit isolant (1) peut être comprimé, en utilisation, à moins de 10 % de son épaisseur initiale.

4. Isolant (1) selon l'une quelconque des revendications précédentes, dans lequel chaque film à bulles d'air (2) est recouvert d'une feuille d'aluminium (3) sur sa face libre.

5. Isolant (1) selon l'une quelconque des revendications précédentes, dans lequel la feuille d'aluminium (3) comporte un revêtement de polyéthylène basse densité sur sa face en contact avec le film à bulles d'air (2) et un revêtement de nitrocellulose sur sa face libre.

6. Isolant (1) selon l'une quelconque des revendications précédentes, dans lequel la couche d'ouate (4) a une épaisseur comprise entre 20 et 60 mm, de préférence entre 25 et 40 mm.

7. Procédé de fabrication d'un isolant (1) selon l'une quelconque des revendications précédentes, ledit procédé comportant les étapes suivantes :
- Extrusion du film à bulles d'air (2) et simultanément lamination thermique du film à bulles d'air (2) avec la feuille d'aluminium (3) pour former un laminé;
- Insertion et collage de l'ouate à base de fibres de polyester (4) entre deux laminés.

8. Procédé selon la revendication 7, dans lequel la feuille d'aluminium (3) est préalablement revêtue sur une face de nitrocellulose et sur l'autre face de polyéthylène basse densité, la face revêtue de polyéthylène basse densité étant en contact avec le film à bulles d'air (2) durant la lamination thermique.

9. Procédé selon la revendication 7 ou 8, dans lequel la colle est à base d'éthylène-acétate de vinyle.

10. Utilisation de l'isolant (1) selon l'une quelconque des revendications 1 à 6, en sous-toiture, dans un mur, dans une paroi de séparation ou comme pare-vapeur.
